# EUROPEAN PATENT APPLICATION

(11) **EP 1 770 462 A2**
(43) Date of publication of application: **04.04.2007**
(21) Application number: 06254896.1
(22) Date of filing: 21.09.2006
(51) Int. Cl.: G05B 19/414

(54) **Multiplexing numerical controller**

(30) Priority: 28.09.2005 JP 2005281698
(71) Applicant: FANUC LTD, Minamitsuru-gun, Yamanashi 401-0597 (JP)
(72) Inventor: Hosokawa, Masahiko c/o Fanuc Manshonharimomi, Minamitsuru-gun, Yamanashi 401-0511 (JP); Ogawa, Shuji c/o Fanuc Manshonharimomi, Minamitsuru-gun, Yamanashi 401-0511 (JP); Miyake, Masahiko c/o MC Takao-Green stage, Tokyo 193-0941 (JP)
(74) Representative: Billington, Lawrence Emlyn

(57) **Abstract**

A numerical controller which has a plurality of command systems and controls a machine having a plurality of spindles, and in which a program can be prepared without taking account of the correspondence between the command systems and the spindles. The numerical controller has n number of command systems and controls a machine tool or the like that has n number of spindles and a required number of other axes. A signal indicative of the correspondence between each command system and a spindle is inputted from external signal input means to a selecting/switching section. The selecting/switching section selects, among the spindles 1 to n, a spindle of a destination such as a command S1 for spindle control outputted by each command system in response to the input signal by software processing. The position of a tool or a workpiece to be machined can be changed in accordance with a change of the correspondence between the command systems and the spindles.

## Description

### BACKGROUND OF THE INVENTION

### 1. Field of the Invention

The present invention relates to a numerical controller having a plurality of command systems for controlling a machine having a plurality of spindles.

### 2. Description of the Related Art

It is a well-known technique to control a machine (e.g., machine tool) having a plurality of spindles by a numerical controller having a plurality of command systems (hereinafter also referred to simply as "systems"). In making this control, it is necessary to specify a correspondence between each command system and a spindle that is controlled by the command system (control-controlled correspondence). According to the prior art technique, the designation of the spindle to be controlled by each command system is selected in accordance with a program command for each system. More specifically, program commands such as the following methods 1 and 2 are used for the specification.

(Method 1): A spindle as a control object is specified with an identifier attached to a program command (S-code command). A technique of this type is described in, for example, JP 62-293307A.

For example, identifiers P1 and P2 for discriminating two spindles 1 and 2 are added to program commands related to spindle operations in the following manner:
- S100 P1: Command (e.g., speed command) related to the operation of the spindle 1,
- S200 P2: Command (e.g., speed command) related to the operation of the spindle 2.

If S100 and S200 are codes for the systems 1 and 2, respectively, the spindles 1 and 2 are controlled (e.g., in speed) by the systems 1 and 2, respectively, in response to the aforesaid program commands.

(Method 2): A program command (M-code command) that specifies a spindle as a control object by its identifier is applied before program commands related to spindle operations, and each system selects a spindle. Techniques of this type are described in, for example, JP 9-73308A and JP 2843568B.

For example, the two spindles 1 and 2 are discriminated by the identifiers P1 and P2, respectively, and the following program commands are successively added to a statement for the system 1 (or system 2):
- M45 P1: Selection of the spindle 1,
- S100: Command (e.g., speed command) related to the operation of the spindle 1,
- M45 P2: Selection of the spindle 2,
- S200: Command (e.g., speed command) related to the operation of the spindle 2.

If S100 and S200 are codes for the systems 1 and 2, respectively, the spindles 1 and 2 are controlled (e.g., in speed) by the systems 1 and 2, respectively, in response to the aforesaid program commands.

In changing the correspondence between the systems 1 and 2 and the spindles 1 and 2, the following program commands are added:
- M45 P2: Selection of the spindle 2,
- S100: Command (e.g., speed command) related to the operation of the spindle 2,
- M45 P1: Selection of the spindle 1,
- S200: Command (e.g., speed command) related to the operation of the spindle 1.

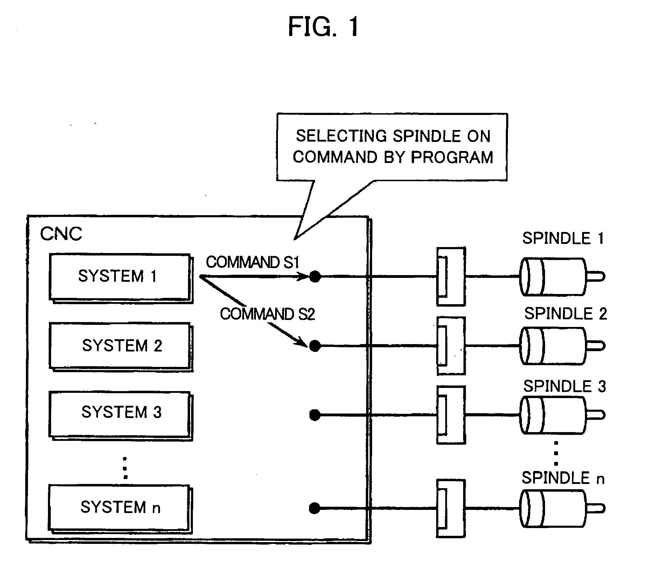

According to these prior art techniques, the controlling-controlled correspondence between each command system and each spindle is selected or specified depending on the program commands, basically. In a conventional case where n number (n is 2 or a greater positive integer, the same applies to the following) of command systems and n number of spindles are used, as shown in FIG 1, a program must be previously loaded with some form of information that is indicative of one of the n number of spindles to be specified for each command for spindle control. In order to control the spindle 1 by means of a system 1 of a computerized numerical controller (CNC) that has systems 1 to n, for example, as also briefly shown in FIG. 1, a command S1 that has a content for the selection or specification of the spindle 1 is used. In order to control the spindle 2, a command S2 that has a content for the selection or specification of the spindle 2 is used. The same applies to other systems and spindles (not shown in FIG. 1). In controlling a spindle j (1 = j = n) by a system i (1 = i = n) (riot shown in FIG. 1), a command Si that has a content for the selection or specification of the spindle j is outputted by the system i.

According to a method where a spindle is selected for each system in response to a program command, as in the cases of the prior art techniques, the program must be prepared in consideration of the spindle to be selected as the control object, so that the program preparation entails a heavy burden.

### SUMMARY OF THE INVENTION

The present invention provides a numerical controller of multi-command system for controlling a machine with a plurality of spindles, which does not require to take account of which spindle each command system controls in preparing the program, so that a burden in preparing the program is reduced.

A numerical controller of the present invention has a plurality of command systems for controlling a machine having a plurality of spindles. The numerical controller comprises: signal input means for inputting an external signal indicating which of the plurality of spindles to be controlled by each of the plurality of command systems; and selecting means for selecting one of the plurality of spindles to which a command for spindle control outputted from each of the command systems is to be transmitted according to the external signal inputted by the signal input means.

The machine controlled by the numerical controller may comprises a machine tool. In this case, at least one of the command systems may control a tool which is driven by an axis other than the spindles and that position and/or posture of at least one of the tool and a workpiece may be altered with change of the external signal inputted by the signal input means.

In preparing a program for use in controlling the machine having the plurality of spindles by the numerical controller having the plurality of command systems, correspondence between the command systems and the spindles to be controlled by the command systems need not be taken into consideration to reduce the burden in preparing the program.

### BRIEF DESCRIPTION OF THE DRAWINGS

FIG. 1 is a diagram for illustrating a method in which the controlling-controlled correspondence between command systems 1 to n and spindles 1 to n is selected or specified in response to a program command by using a prior art numerical controller;

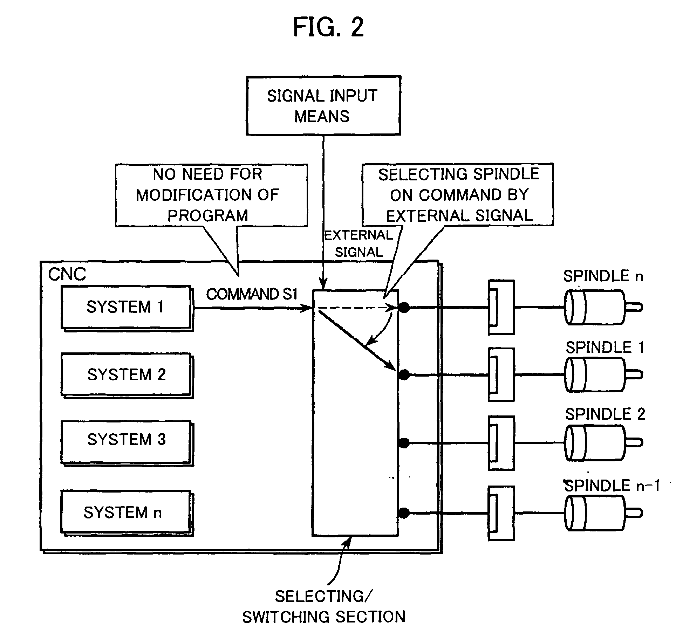

FIG. 2 is a diagram showing an outline of a system unit that includes a numerical controller according to the present invention, and indicates that the controlling-controlled correspondence between the command systems 1 to n and the spindles 1 to n can be selected or specified without using any program commands;

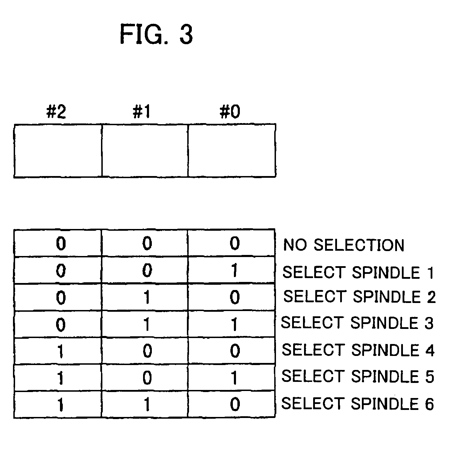

FIG 3 shows a configuration example for switching signals for spindles controlled by command systems;

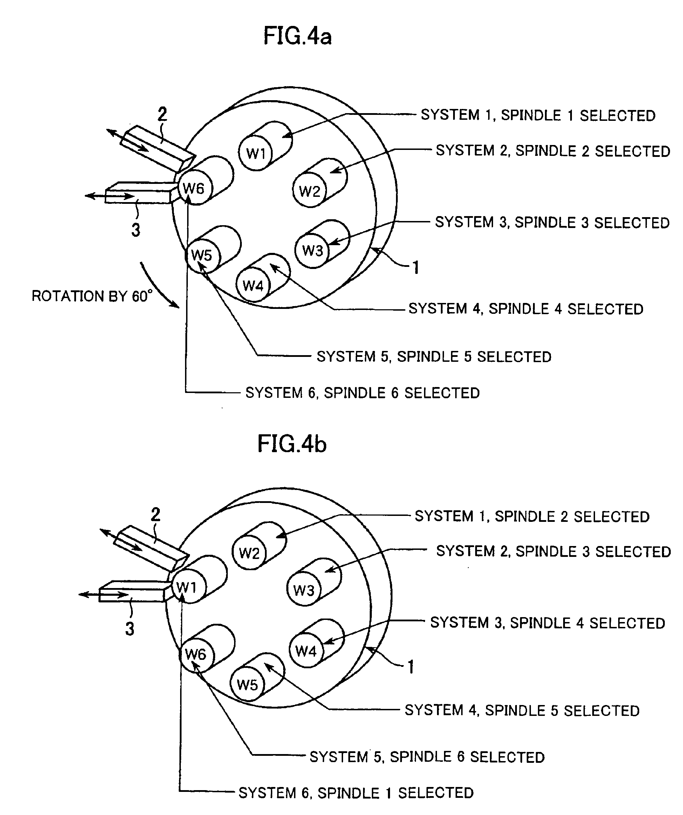

FIGS. 4a and 4b are views showing a case where the position of a tool or a workpiece to be machined is changed in accordance with switching of the correspondence between the command systems and the spindles, in which FIG. 4a shows a reference state and FIG 4b shows a state obtained after the switching of the command system-spindle correspondence from the reference state;

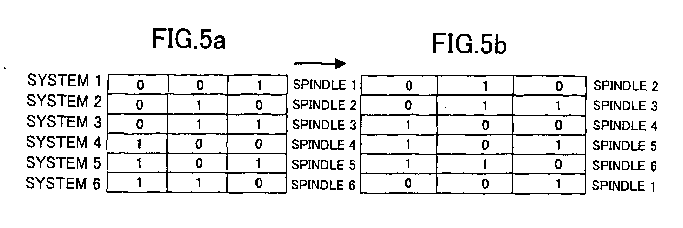

FIGS. 5a and 5b are tables showing switching of the command system-spindle correspondence caused by state change from FIG. 4a to FIG. 4b, in which FIG. 5a shows the command system-spindle correspondence in the reference state of FIG. 4a and FIG 5b shows the command system-spindle correspondence in the state of FIG 4b after the switching;

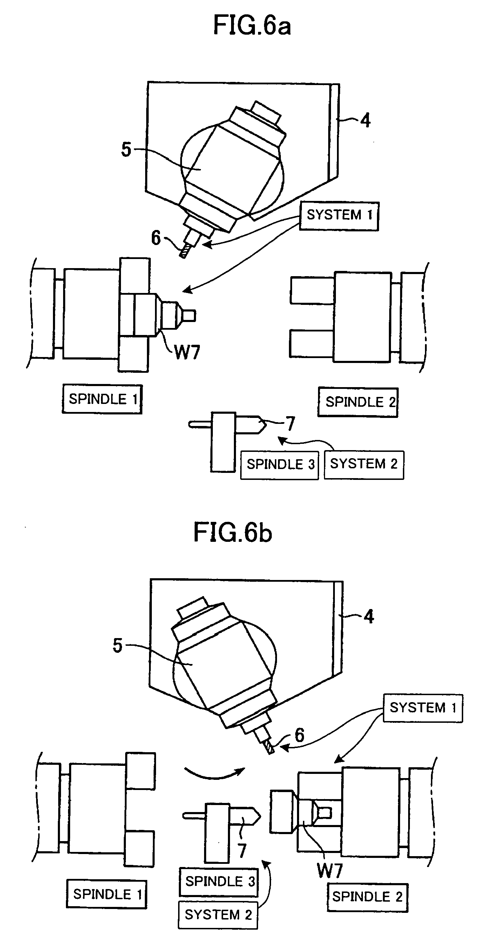

FIGS. 6a and 6b are views showing another case where the position of a tool or a workpiece to be machined is changed in accordance with switching of the command system-spindle correspondence, in which FIG. 6a shows a reference state and FIG. 6b shows a state obtained after the switching of the command system-spindle correspondence from the reference state; and

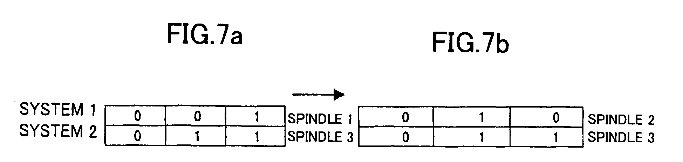

FIGS. 7a and 7b are tables showing switching of the command system-spindle correspondence caused by state change from FIG. 6a to FIG 6b, in which FIG. 7a shows the command system-spindle correspondence in the reference state of FIG 6a and FIG 7b shows the command system-spindle correspondence in the state of FIG 6b after the switching.

### DETAILED DESCRIPTION

FIG. 2 is a diagram showing an outline of a system unit that includes a computerized numerical controller (CNC) according to the present invention. The numerical controller has "n" number of command systems and controls a machine (e.g., machine tool) that has "n" number of spindles and a required number of axes other than the spindles (not shown, hereinafter also referred to as "other axes"). This numerical controller is not particularly different from conventional multi-system numerical controllers except for items associated with selection or switching of spindles that are controlled by the following command systems.

Specifically, the numerical controller has a system program for generally controlling the entire system unit, a program that contains commands or the like for controlling the n number of spindles and the other axes (hereinafter referred to simply as "program"), and a memory that stores various parameters and the like. Each command system includes a PC (programmable controller) and performs a spindle control process, spindle feedback process, servo control processes for the other axes, etc. in accordance with the program.

A command (e.g., command for specifying revolutions per second) for controlling "spindles controlled by command systems" written in the program need not be loaded with information on "a spindle controlled by the command system concerned," which is required by the prior art method 1. Unlike the case of the prior art method 2, moreover, a command for the spindle to be controlled is not issued in advance. In the present invention, external signal input means and a selecting/switching section are provided so that a signal indicative of the correspondence between each command system and the spindle controlled by the command system is inputted from the external signal input means to the selecting/switching section. The selecting/switching section is furnished with software that selects the spindle as a destination of the command for the control of the spindle outputted by each command system in accordance with the input signal. Further, the external signal input means may possibly be formed of an operation panel of the numerical controller, a device that receives a signal from any other machining section and outputs the signal to the numerical controller, etc.

If the command for the spindle control outputted by a system i (i = 1, 2 ··· n) is given by Si for the sake of convenience, the destination of the command Si is selected by the selecting/switching section in accordance with a switching signal (selection signal) inputted from the external signal input means. If a signal to switch the spindle to be controlled by the system 1 from a spindle n to a spindle 1 is inputted, in the illustrated example, a command Sn for spindle control outputted by a system n is switched from a state in which it is transmitted to the spindle n (more specifically, "control section of the spindle n," the same applies to the following) over to a state in which it is transmitted to the spindle 1 (control section of the spindle 1).

FIG. 3 shows a configuration example for switching signals (selection signals), in which n = 6 is given and each signal is represented by a three-digit binary number. In FIG 3, #0 to #2 designate registers corresponding to the individual digits. One such switching signal exists in each command system and constitutes a "signal indicative of the correspondence between each command system and a spindle controlled by the command system."

If a signal section for a system 1 is given by "#0 = 1, #1 = 0, #2 = 0," for example, therefore, the system 1 is ready to control the spindle 1, and a command S1 is transmitted to the spindle 1. If the signal section is given by "#0 = 1, #1 = 0, #2 = 1," the system 1 is ready to control a spindle 5, and the command S1 is transmitted to the spindle 5. The same applies to the other systems. If a signal section for a system 3 is given by "#0 = 1, #1 = 0, #2 = 0," for example, the system 3 is ready to control the spindle 1, and a command S3 is transmitted to the spindle 3. If this signal section is given by "#0 = 1, #1 = 1, #2 = 0," the system 3 is ready to control a spindle 6, and the command S3 is transmitted to the spindle 6. In some cases, the command systems may not be as many as the spindles. Even in these cases, however, all the command systems and the spindles can be represented in one-to-one relation with signals if the types of signals are increased so as to cover the correspondence between all the command systems and the spindles.

As mentioned before, a typical example of the machine is a machine tool. In the case of the machine tool, some (or all, in some cases) of a plurality of command systems control tools that are not driven by the spindles. In changing the correspondence between the command systems and the spindles, in the control of the machine tool of this type, a machining form may be supposed such that the position of a tool and/or a workpiece to be machined must be changed.

FIGS. 4a and 4b show an example of such a case, and more specifically, illustrate a lathe in which workpieces are mounted individually on six spindles as they are rotated. Numeral 1 denotes a turret-type base that is provided with the six spindles 1 to 6. It can be rotated by an axis (not a spindle) that is controlled in any of the systems of the numerical controller. As shown in FIGS. 4a and 4b, one workpiece is mounted on each of the spindles 1 to 6. Numerals 2 and 3 individually denote cutting tools (tools) whose positions are controlled by other axes (e.g., X- and Y-axes) than the spindles. In this case, they are mounted on X- and Y-axes that are controlled by the system 6. These tools may alternatively be mounted on axes that are controlled by any other system.

The states shown in FIGS. 4a and 4b are different in the rotational position of the turret-type base 1. If the state of FIG. 4a is a reference state in which the base 1 is in a reference rotational position, the base 1 shown in FIG 4b is in a position obtained when it is rotated through an angle of 60° (angle equivalent to an angular intervals between the spindles) to the reference position in the direction of the arrow in FIG. 4a. The spindles are mounted with workpieces W1 to W6 when they rotate through 60°. A command for this rotation is outputted from the system for the axis that rotates the base 1. This output is made in synchronism with the change of the correspondence between the systems and the spindles.

Specifically, the above output is made when the signal state shown in FIG. 5a is switched over to the signal state shown in FIG. 5b in response to signal input from the signal input means (see FIG 2), for example, whereupon the state of FIG. 4a is shifted to the state of FIG. 4b. At least while the base is rotating, the cutting tools 2 and 3 are withdrawn from the workpieces. They touch and work one of the workpieces (W6 in FIG. 4a or W1 in FIG. 4b) in response to a machining command.

If the change of the correspondence between the systems and the spindles shown in FIGS. 5 is combined with the shift of the relative positions of the tools and the workpieces shown in FIGS. 4, a plurality of workpieces W1 to W6 can be successively worked by the cutting tools 2 and 3 that are controlled in the same system (system 6 in this case). If tools of other types (e.g., rough machining tool on the upstream side of rotation, finish machining tool on the downstream side, etc.) are arranged together with the cutting tools 2 and 3 at angular intervals of 60° (or an integer multiple thereof) around the base 1, a series of machining operations can be executed for each workpiece.

FIGS. 6a and 6b show another case where the position of a tool or a workpiece to be machined is changed in accordance with the change of the correspondence between the command systems and the spindles. In this example, a drilling device 5 that is fitted with a drill (tool) 6 is mounted on a base 4 so as to be shiftable between a reference posture shown in FIG. 6a and a rotated posture shown in FIG. 6b, as indicated by the arcuate arrow. In this example, the command systems include only systems 1 and 2, and the spindles include spindles 1 to 3.

The posture is changed by rotating a rotary axis for rotating the drilling device 5, and a command for the change is outputted from any of the systems of the numerical controller. Further, the rotation of the drill 6 of the drilling device 5 is driven by an axis (not a spindle) that is controlled by the system 1.

Although the command for the change from the state of FIG. 6a to the state of FIG 6b may be outputted as a program command in the system that controls the axis for rotating the drilling device 5, the rotation of the drilling device 5 may alternatively be outputted by shifting a switch that is attached to the numerical controller. In any case, this command should be outputted without delay after the correspondence between the systems and the spindles is changed. In the case of this example, the aforesaid output is delivered when a signal state shown in FIG. 7a is switched over to a signal state shown in FIG. 7b in response to signal input from the signal input means (see FIG 2). Thereupon, the state shown in FIG. 6a is switched over to the state shown in FIG 6b.

As seen from the illustration of FIGS. 6a and 7a, the spindle 1 that is fitted with a workpiece W7 in the state of FIG 6a is controlled by the system 1, while a spindle 2 is not under the control of any system (naturally nonoperating). In the state of FIG. 6b after signal change, in contrast with this, the workpiece W7 is disengaged from the spindle 1 (e.g., by a robot), and the spindle 1 is not under the control of any system (naturally nonoperating). On the other hand, the spindle 2 that is newly fitted with the workpiece W7 (e.g., by a robot) is under the control of the system 1. Further, the spindle 3 that is fitted with the workpiece W7 is under the control of the system 2.

In FIG. 6, the workpiece W7 and the drill 6 are shown at a distance. During machining operation, however, a command to bring the workpiece W7 and the drill 6 close to each other is outputted by any of the systems. Thus, if the change of the correspondence between the systems and the spindles shown in FIGS. 7 is combined with the change of the tool posture shown in FIGS. 6, the workpiece W7 can be bored in different positions and directions. Further, machining can be suitably performed by means of a rotary tool that is driven by the spindle 3.

## Claims

1. A numerical controller having a plurality of command systems for controlling a machine having a plurality of spindles, comprising:
signal input means for inputting an external signal indicating which of the plurality of spindles to be controlled by each of the plurality of command systems; and
selecting means for selecting one of the plurality of spindles to which a command for spindle control outputted from each of the command systems is to be transmitted according to the external signal inputted by said signal input means.

2. A numerical controller according to claim 1, wherein the machine controlled by the numerical controller comprises a machine tool.
